Europäisches Patentamt

European Patent Office

Office européen des brevets

(19)

(11) Veröffentlichungsnummer: **0 207 296**
**B1**

(12) **EUROPÄISCHE PATENTSCHRIFT**

(45) Veröffentlichungstag der Patentschrift:
21.03.90

(51) Int. Cl.⁴: **C08G 18/10,** C08G 18/32,
C08G 18/48, C08J 9/00

(21) Anmeldenummer: 86107328.6

(22) Anmeldetag: 30.05.86

(54) Verfahren zur Herstellung von elastischen Polyurethan-Weichschaumstoffen und auf diese Weise hergestellte Formkörper.

(30) Priorität: 01.06.85 DE 3519692

(43) Veröffentlichungstag der Anmeldung:
07.01.87 Patentblatt 87/2

(45) Bekanntmachung des Hinweises auf die Patenterteilung:
21.03.90 Patentblatt 90/12

(84) Benannte Vertragsstaaten:
AT BE CH DE FR GB IT LI NL SE

(56) Entgegenhaltungen:
EP-A- 0 075 758
DE-A- 2 531 336
GB-A- 974 169

(73) Patentinhaber: BASF Aktiengesellschaft,
Carl-Bosch-Strasse 38, D-6700 Ludwigshafen(DE)

(72) Erfinder: Mueller, Gerhard, Dr., Endrödi Sándor U 25,
H-1026 Budapest(HU)
Erfinder: Marx, Matthias, Dr., Seebacher Strasse 49,
D-6702 Bad Duerkheim(DE)
Erfinder: Jarre, Wolfgang, Dr., Auf dem Leimen 19,
D-6718 Gruenstadt(DE)
Erfinder: Baumann, Edwin, Laurentiusstrasse 11,
D-6707 Schifferstadt(DE)
Erfinder: Buethe, Ingolf, Dr., Am Wasserturm 1,
D-6737 Boehl-Iggelheim(DE)

**Beschreibung**

Die Herstellung von Polyurethan (PU)-Weichschaumstoffen aus organischen Polyisocyanaten, Polyolen, Treibmitteln, Katalysatoren, gegebenenfalls Kettenverlängerungs- oder Vernetzungsmitteln, Hilfs- und Zusatzstoffen ist aus zahlreichen Patent- und Literaturveröffentlichungen bekannt. Verweisen möchten wir beispielsweise auf die Monographien von J.H. Saunders und K.C. Frisch, High Polymers, Band XVI "Polyurethanes" Teil I und II (Verlag Interscience Publishers, New York) und R. Vieweg und A. Höchtlen, Kunststoff-Handbuch, Band VII, Polyurethane, Carl Hanser Verlag, München, 1966.

Um allen Anwendungsgebieten gerecht zu werden, müssen die Polyurethanschaumstoffe bei möglichst niedrigem Raumgewicht ein hohes mechanisches Niveau aufweisen, das sich in einer hohen Reißdehnung, Zugfestigkeit, Weiterreißfestigkeit und Stauchhärte manifestiert.

Elastische PU-Weichschaumstoffe können in offenen oder geschlossenen Formwerkzeugen hergestellt werden. Zur Herstellung von Formkörpern in geschlossenen Formwerkzeugen finden das Heiß- oder Kaltschaumverfahren, bei denen Polyetherpolyole und organische Polyisocyanate verschiedener Reaktivität verwendet werden, Anwendung.

Heiß- und Kaltformschaumstoffe unterscheiden sich jedoch nicht nur hinsichtlich der eingesetzten Aufbaukomponenten und Verfahrenstechnik, sondern auch der mechanischen Eigenschaften, wobei Heißformschaumstoffe Vorteile im Stauchhärte-Rohdichte-Verhältnis und bei der Dehnbarkeit aufweisen. Kaltschaumstoff-Systeme reagieren ohne Nachheiz-Prozeß in kurzer Zeit aus, so daß vergleichsweise kurze Formenstandzeiten bei der Herstellung möglich sind.

Weichelastische PU-Formschaumstoffe, deren Herstellung, Verfahrenstechnik und Eigenschaften werden beispielsweise beschrieben in "Polyurethane", Kunststoff-Handbuch, Band 7, herausgegeben von Dr. J. Oertel, Carl Hanser Verlag, München, Wien, 1983, Seite 212 ff.

Die Aufgabe der vorliegenden Erfindung bestand darin, mit Hilfe der energieeinsparenden Kaltformschaumtechnik elastische PU-Weichschaumstoffe herzustellen, die in ihren mechanischen Eigenschaften Formkörpern, erhalten nach dem Heißformschaumverfahren entsprechen. Das beim Heißschaumverfahren erforderliche Nachheizen der Formwerkzeuge, beispielsweise 10 Minuten bei 180°C, verbunden mit langen Zykluszeiten, z.B. 15 bis 20 Minuten, und hohem Energieeinsatz sollte entbehrlich werden. Hinsichtlich des Kaltschaumverfahrens sollte auf den hohen Gehalt an Halogenkohlenwasserstoffen als physikalisch wirkende Treibmittel ganz oder zumindest teilweise verzichtet und dadurch die hohen Kosten für die technisch aufwendige Rückgewinnung derselben minimiert werden. Kostenintensive Verfahrenstechniken, wie z.B. das Verschäumen unter vermindertem Druck gemäß EP-A-23 749, das nur mit komplizierten Vorrichtungen möglich ist und geeignete Rezepturen und eine exakte Druckführung während des gesamten Herstellungprozesses voraussetzt, sollten vermieden werden.

Diese Aufgabe konnte überraschenderweise durch die Verwendung von organischen Isocyanatprepolymeren und einer speziellen Mischung aus Verbindungen mit reaktiven Wasserstoffatomen zur Herstellung von elastischen PU-Weichschaumstoffen, zweckmäßigerweise nach der Kaltschaumverfahrenstechnik, gelöst werden.

Gegenstand der Erfindung ist somit ein Verfahren zur Herstellung von elastischen PU-Weichschaumstoffen durch Umsetzung von

A) organischen Isocyanat-Prepolymeren aus Polyether-Polyolen mit mindestens 50% primären Hydroxylgruppen mit

B) Verbindungen mit reaktiven Wasserstoffatomen in Gegenwart von

C) Treibmitteln,

D) Katalysatoren und gegebenenfalls

E) Hilfsmitteln und/oder Zusatzstoffen

das dadurch gekennzeichnet ist, daß man als Verbindungen mit reaktiven Wasserstoffatomen (B) eine Mischung verwendet aus

a) mindestens einem di- bis tetrafunktionellen Polyether-polyol mit weniger als 10 Gew.%, insbesondere 4 bis 8 Gew.% endständigen Ethylenoxidgruppen, bezogen auf den Gesamtgehalt an Alkylenoxidgruppen, und einer Hydroxylzahl von 20 bis 80, vorzugsweise 25 bis 60,

b) mindestens einem Alkanolamin und

c) 10 bis 25 Gew.%, vorzugsweise 12 bis 20 Gew.% Wasser, bezogen auf das Gesamtgewicht der Komponenten (B, a) bis (B, c).

Das erfindungsgemäße Verfahren gestattet die Herstellung von elastischen, niedrigdichten PU-Weichschaumstoffen, vorzugsweise solchen mit Dichten kleiner als 40 kg/m$^3$, mit einem hohen mechanischen Eigenschaftsniveau, insbesondere einer großen Dehnbarkeit und Zugfestigkeit, auf praxisüblichen Vorrichtungen der Kaltschaumverfahrenstechnik, d.h. ohne ein Nachheizen der mit schäumfähiger Reaktionsmischung gefüllten Formwerkzeuge.

A) Zur Herstellung der elastischen PU-Weichschaumstoffe, zweckmäßiger weise mit Hilfe der Kaltformschaumtechnik, nach dem erfindungsgemäßen Verfahren, finden als Polyisocyanatkomponente organische Isocyanat-Prepolymere mit einem NCO-Gehalt von 6 bis 20 Gew.%, vorzugsweise 8 bis 18 Gew.%, bezogen auf das Gesamtgewicht, Anwendung, die nach an sich üblicher Verfahrensweise, z.B. bei Reaktionstemperaturen von 30 bis 120°C und Reaktionszeiten von 0,5 bis 6 Stunden, durch Umsetzung von 2,4- oder 2,6-Toluylen-diisocyanaten sowie beliebigen Gemischen dieser Isomeren, insbesondere solchen im Gewichtsverhältnis der Isomeren von 80 : 20 bis 65 : 35, und/oder 4,4'- oder 2,4'-Diphenylmethandiisocyanaten sowie beliebigen Gemischen dieser Isomeren, beispielsweise solchen im Gewichtsverhältnis von 4,4'- : 2,4'-Diphenylmethandiisocyanat von 100 : 25 bis 100 : 100, wobei die Diphenylmethandiisocyanat-Isomeren pro 100 Gewichtsteile gegebenenfalls noch bis zu 10 Gewichtsteile tri-und/oder höherfunktionelle Polyphenylpolymethylen-polyisocyanate enthalten können, und di- bis tetrafunktionellen, vorzugsweise tri-bis tetrafunktionellen Polyetherpolyolen mit einer Hydroxylzahl von 20 bis 50, vorzugsweise 25 bis 40 und einem Gehalt an endständigen Ethylenoxidgruppen von 10 bis 30 Gew.%, vorzugsweise 12 bis 25 Gew.%, bezogen auf das Gesamtgewicht an Alkylenoxidgruppen, und vorzugsweise mindestens 65 % primären Hydroxylgruppen erhalten werden. Besonders bewährt haben sich und daher vorzugsweise zur Herstellung der Isocyanat-Prepolymeren Verwendung finden Toluylen-diisocyanat-Isomerengemische.

Die zur Herstellung der Isocyanat-Prepolymeren geeigneten oder - wie nachfolgend noch dargelegt werden wird - als Verbindungen mit reaktiven Wasserstoffatomen verwendbaren Polyetherpolyole können nach bekannten Verfahren, beispielsweise durch kationische Polymerisation mit Lewis-Säuren, wie Antimonpentachlorid, Borfluorid-Etherat u.a. oder gegebenenfalls modifizierter Bleicherde als Katalysatoren oder durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren aus einem oder mehreren Alkylenoxiden mit 2 bis 4 Kohlenstoffatomen im Alkylenrest und bei anionischer Polymerisation einem Startermolekül, das 2 bis 4 reaktive Wasserstoffatome gebunden enthält, hergestellt werden.

Geeignete Alkylenoxide sind beispielsweise Tetrahydrofuran, 1,3-Propylenoxid, 1,2- bzw. 1,3-Butylenoxid, Styroloxid und vorzugsweise 1,2-Propylenoxid und Ethylenoxid. Die Alkylenoxide können einzeln, alternierend nacheinander oder als Mischungen verwendet werden, wobei jedoch die zur Isocyanat-Prepolymerherstellung verwendeten Polyetherpolyole den oben genannten Gehalt an endständigen Ethylenoxidgruppen besitzen müssen. Als Startermoleküle kommen beispielsweise in Betracht: Wasser, aliphatische und/oder aromatische, gegebenenfalls N-mono-, N,N-oder N,N'-dialkyl-substituierte Diamine mit 1 bis 4 Kohlenstoffatomen im Alkylrest und 2 bis 12, vorzugsweise 2 bis 6 Kohlenstoffatomen im Alkylenrest und 6 bis 15, vorzugsweise 6 bis 13 Kohlenstoffatomen im Arylenrest, wie z.B. gegebenenfalls mono- oder dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4-und 2,6-Toluylendiamin und 4,4'-, 2,4'- und 2,2'-Diamino-diphenylmethan.

Als Startermoleküle kommen ferner in Betracht Alkanolamine, wie z.B. Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden zwei- bis vierwertige, insbesondere drei- und/oder vierwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Zur Herstellung der Prepolymeren können die Polyether-polyole einzeln oder in Form von Mischungen eingesetzt werden. Vorzugsweise Anwendung finden mit Trimethylolpropan oder insbesondere Glycerin gestartete Polyoxypropylen-polyoxyethylenpolyole mit den genannten Merkmalen.

B) Die erfindungsgemäß geeigneten Isocyanat-Prepolymeren (A) werden zur Herstellung der elastischen PU-Weichschaumstoffe mit speziell ausgewählten Verbindungen mit reaktiven Wasserstoffatomen (B), zweckmäßigerweise nach dem Kaltschaumverfahren in einem geschlossenen Formwerkzeug, zur Reaktion gebracht. Als derartige Verbindungen (B) kommen Mischungen in Betracht aus

(a) mindestens einem di- bis tetrafunktionellen Polyether-polyol mit weniger als 10 Gew.%, vorzugsweise 0 bis 8 Gew.% und insbesondere 4 bis 8 Gew.% endständigen Ethylenoxidgruppen, wobei die Gew.% bezogen sind auf das Gesamtgewicht an Alkylenoxidgruppen, und einer Hydroxylzahl von 20 bis 80, vorzugsweise von 25 bis 60,
(b) mindestens einem Alkanolamin und
(c) 10 bis 25 Gew.%, vorzugsweise 12 bis 20 Gew.% Wasser, bezogen auf das Gesamtgewicht der Komponenten (B, a) bis (B, c).

Vorzugsweise Anwendung finden Mischungen, die bestehen aus

(a) 55 bis 89,5 Gew.-Teilen, insbesondere 86 bis 70 Gew.-Teilen mindestens eines solchen Polyetherpolyols,
(b) 0,5 bis 20 Gew.Teilen, insbesondere 2 bis 10 Gew.-Teilen mindestens eines Alkanolamins und
(c) 10 bis 25 Gew.-Teilen, vorzugsweise 12 bis 20 Gew.-Teilen Wasser.

Die Polyether-polyole (B, a) die einzeln oder als Gemische eingesetzt werden können, können beispielsweise nach den oben genannten Verfahren hergestellt werden und primäre und/oder sekundäre Hydroxylgruppen gebunden enthalten. Vorteilhafterweise Anwendung finden di-und/oder trifunktionelle Polyoxypropylen-polyoxyethylen-polyole mit 4 bis 8 Gew.% endständigen Ethylenoxidgruppen und Hydroxylzahlen von 25 bis 60.

Als Alkanolamine (B, b) werden zweckmäßigerweise Di- und/oder Trialkanolamine mit 2 bis 3 C-Atomen im Alkylenrest verwendet. Beispielhaft genannt seien: Ethanolamin, 1,3-Propanolamin, Isopropanolamin, Di-1,3-propanolamin, Diisopropanolamin, Tri-1,3-propanolamin, Triisopropanolamin und vorzugsweise Diethanolamin und/oder Triethanolamin. Die Alkanolamine können einzeln oder in Form von Mischungen Anwendung finden.

Zur Herstellung der elastischen PU-Weichschaumstoffe werden die organischen Isocyanat-Prepolymeren (A) und Verbindungen mit reaktiven Wasserstoffatomen (B) in Gegenwart von Treibmitteln (C), Katalysatoren (D) und gegebenenfalls Hilfsmitteln und Zusatzstoffen (E) in solchen Mengenverhältnissen zur Reaktion gebracht, daß der Isocyanatindex 70 bis 120, vorzugsweise 80 bis 110 beträgt.

C) Als Treibmittel (C) findet das in der Mischung der Verbindungen mit reaktiven Wasserstoffatomen (B) enthaltene Wasser (B, c) Anwendung, das mit den Isocyanatgruppen der Aufbaukomponente (A) unter Bildung von Aminoendgruppen und Kohlendioxid reagiert.

Zusätzlich zu Wasser können gegebenenfalls, beispielsweise zur Verdünnung und damit Verminderung der Viskosität der Aufbaukomponente (A), auch physikalisch wirkende Treibmittel, wie z.B. halogenierte Kohlenwasserstoffe, eingesetzt werden. Beispielhaft genannt seien Methylenchlorid, Dichlordifluormethan, Dichlormonofluormethan, Dichlortetrafluorethan, 1,1,2-Trichlor-1,2,2-trifluorethan und vorzugsweise Trichlorfluormethan. Vorzugsweise wird die Reaktion jedoch in Abwesenheit von Halogenkohlenwasserstoffen oder anderen physikalisch wirkenden Treibmitteln durchgeführt.

D) Zur Beschleunigung der Umsetzung zwischen dem Isocyanat-Prepolymeren (A) und der Mischung (B) aus mindestens einem Polyether-polyol, mindestens einem Alkanolamin und Wasser werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-diethylether, Bis-(dimethylaminopropyl) -harnstoff, N-Methyl- bzw. N-Ethylmorpholin, Dimethylpiperazin, Pyridin, 1,2-Dimethylimidazol, 1-Azabicyclo-(3,3,0)-octan, Dimethylaminoethanol, N,N',N''-Tris-(dialkylaminoalkyl)-hexahydrotriazine, z.B. N,N',N''-Tris-(dimethylaminopropyl)-s-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie z.B. Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.%, vorzugsweise 0,5 bis 5 Gew.% Katalysator auf Basis tertiärer Amine und/oder 0,01 bis 0,5 Gew.%, vorzugsweise 0,05 bis 0,25 Gew.% Metallsalze, bezogen auf das Gewicht des Isocyanat-Prepolymeren (A).

E) Der Reaktionsmischung können gegebenenfalls auch noch Hilfs- und/oder Zusatzstoffe (E) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Isocyanat-Prepolymeren angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyether-polyolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Fillerpolyole, bei denen wäßrige Polymerdispersionen in Polyether-polyol-dispersionen übergeführt werden.

Die organischen und anorganischen Füllstoffe können einzeln oder als Gemische verwendet werden. Vorzugsweise Anwendung finden stabile Füllstoff-Polyether-polyol-Dispersionen, bei denen die Füllstoffe in Gegenwart von Polyether-polyolen in situ mit hohen örtlichen Energiedichten auf eine Teilchengröße kleiner als 7 µm zerkleinert und hierbei gleichzeitig dispergiert werden. Füllstoff-Polyether-polyol-Dispersionen dieser Art werden beispielsweise in den deutschen Offenlegungsschriften 28 50 606, 28 50 610 und 29 32 304 beschrieben.

Die anorganischen und/oder organischen Füllstoffe werden der Reaktionsmischung vorteilhafterweise in Mengen von 0,5 bis 50 Gew.%, vorzugsweise 1 bis 40 Gew.%, bezogen auf das Gewicht der Aufbaukomponenten (A) und (B) einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyether-polyole oder mehrwertiger Alkohole und halogenierter Phthalsäurederivate zum Flammfestmachen der PU-Weichschaumstoffe verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile der Aufbaukomponenten (A) und (B) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der elastischen PU-Weichschaumstoffe nach dem erfindungsgemäßen Verfahren werden die Aufbaukomponenten (A), (B) und (D) sowie gegebenenfalls (E) bei Temperaturen von ungefähr 15 bis 60°C, vorzugsweise 20 bis 50°C gemischt, die Reaktionsmischung in ein offenes Formwerkzeug eingebracht und bei einer Formwerkzeugtemperatur von 25 bis 80°C, vorzugsweise 40 bis 65°C in dem offenen oder vorzugsweise danach geschlossenen Formwerkzeug aushärten gelassen. Die erhaltenen Formkörper sind nach einer Formstandzeit von ungefähr 2 bis 10 Minuten entformbar.

Bei Verwendung einer Mischvorrichtung mit mehreren Zulaufdüsen können die Aufbaukomponenten einzeln zugeführt und in der Mischkammer intensiv vermischt werden. Als besonders zweckmäßig hat es sich jedoch erwiesen, so daß diese Verfahrensweise bevorzugt angewandt wird, nach dem Zweikomponenten-Verfahren zu arbeiten und die Aufbaukomponenten (B), (D) und gegebenenfalls (E) zu der sogenannten A-Komponente zu vereinigen und als B-Komponente die Isocyanat-Prepolymeren (A) zu verwenden. Vorteilhaft ist hierbei, daß die A- und B-Komponente raumsparend transportiert und über einen gewissen Zeitraum gelagert werden können und vor Herstellung der elastischen PU-Weichschaumstoffe nur noch intensiv gemischt werden müssen.

Als Formwerkzeuge finden vorzugsweise temperierbare Metall- oder Aluminiumgußformen Verwendung. Geeignet sind jedoch auch Kunststoff-Werkzeuge, beispielsweise aus faserverstärkten ungesättigten Polyester- oder Epoxidharzen. Da die Kaltformschaumstoffe unter Verdichtung, beispielsweise mit einem Verdichtungsgrad von 1,1 bis 1,5, hergestellt werden können, muß das Formwerkzeug gegebenenfalls eine entsprechende Druckstabilität besitzen.

Die nach dem erfindungsgemäßen Verfahren hergestellten elastischen PU-Weichschaumstoffe besitzen Dichten von 25 bis 60 kg/m³, vorzugsweise 25 bis 40 kg/m³ und zeichnen sich bei sehr guten mechanischen Eigenschaften für Kaltformschaumstoffe, insbesondere durch eine große Zugfestigkeit und erhöhte Dehnbarkeit aus.

Die elastischen PU-Weichschaumstoffe eignen sich zur Verwendung als Polstermöbel, Matratzen, Automobilsitzen und Nackenstützen.

Isocyanat-Prepolymer A:

Hergestellt durch Umsetzung von 28 Gew.-Teilen eines Glycerin gestarteten Polyoxypropylen-polyoxyethylen-triols mit 20 Gew.% polymerisierten Ethylenoxideinheiten im Endblock, einer Hydroxylzahl von 28 und 80 % primären Hydroxylgruppen mit 14,7 Gew.-Teilen eines 2,4- und 2,6-Toluylen-diisocyanat-Isomerengemisches im Gewichtsverhältnis 80:20 unter Rühren bei 80°C in 2 Stunden. Das erhaltene Isocyanat-Prepolymere A besaß einen NCO-Gehalt von 15,1 Gew.% und eine Viskosität von 807 mPas (25°C).

Isocyanat-Prepolymer B:

Hergestellt durch Umsetzung einer Mischung aus 21,6 Gew.-Teilen des in Isocyanat-Prepolymer A beschriebenen Polyoxypropylen-polyoxyethylentriols und 7,2 Gew.-Teilen eines Pfropf-polyetherpolyols mit einer Funktionalität von 2,4, 15 Gew.% polymerisierten Ethylenoxideinheiten im Endblock, einer Hydroxylzahl von 28 und einem Styrol/Acrylnitril-Copolymerengehalt von 21 Gew.% mit 19,5 Gew.-Teilen eines 2,4- und 2,6-Toluylen-diisocyanat-Isomerengemisches im Gewichtsverhältnis 80:20 unter Rühren bei 80°C in 2 Stunden. Das erhaltene Isocyanat-Prepolymere B besaß einen NCO-Gehalt von 17,1 Gew.% und eine Viskosität von 715 mPas (25°C).

Isocyanat-Prepolymer C:

Hergestellt durch Umsetzung von 64,9 Gew.-Teilen eines Polyoxypropylendiols mit der Hydroxylzahl 42 und 5 % primären Hydroxylgruppen mit 35,1 Gew.-Teilen eines 2,4- und 2,6-Toluylen-diisocyanat-Isomerengemisches im Gewichtsverhältnis 80:20 unter Rühren bei 70°C in 3 Stunden. Das erhaltene Isocyanat-Prepolymere C besaß einen NCO-Gehalt von 15,2 Gew.% und eine Viskosität von 764 mPas (25°C).

Beispiel 1

A-Komponente: Mischung aus
69,62 Gew.-Teilen eines Glycerin gestarteten Polyoxypropylen -polyoxyethylen-triols mit 6 Gew.% polymerisierten endständigen Ethylenoxideinheiten und einer Hydroxylzahl von 56,
4,65 Gew.-Teilen Diethanolamin,
1,86 Gew.-Teilen Triethanolamin,
1,58 Gew.-Teilen Triethylendiamin (33 gewichtsprozentig in Dipropylenglykol),
0,92 Gew.-Teilen Bis(dimethylaminoethyl)-ether,
16,72 Gew.-Teilen Wasser und
4,65 Gew.-Teilen eines Silikonstabilisators.

B-Komponente: Isocyanat-Prepolymer A

100 Gew.-Teile der A-Komponente und 600 Gew.-Teile des Isocyanat-Prepolymer A wurden bei Raumtemperatur intensiv gemischt. 673 g dieser schäumfähigen Reaktionsmischung wurden in ein auf 50°C temperiertes Formwerkzeug mit den Innenabmessungen 40×40×10 cm eingebracht und in dem geschlossenen Formwerkzeug aufschäumen gelassen.

Man erhielt einen Schaumstoff, an dem folgende mechanische Eigenschaften bestimmt wurden:
Dichte nach DIN 53 420 [g/l]: 39
Reißdehnung nach DIN 53 571 [%]: 162
Zugfestigkeit nach DIN 53 571 [kPa:] 130

Vergleichsbeispiel I

A-Komponente: Mischung aus
69,62 Gew.-Teilen eines Glycerin gestarteten Polyoxypropylen -polyoxyethylen-triols mit 6 Gew.% endständigen Ethylenoxideinheiten und einer Hydroxylzahl von 56,
393,4 Gew.-Teilen eines Glycerin gestarteten Polyoxypropylen -polyoxyethylen-triols mit 20 Gew.% polymerisierten Ethylenoxideinheiten im Endblock, einer Hydroxylzahl von 28 und 80 % primären Hydroxylgruppen,
4,65 Gew.-Teilen Diethanolamin,
1,86 Gew.-Teilen Triethanolamin,
1,58 Gew.-Teilen Triethylendiamin (33 gewichtsprozentig in Dipropylenglykol),
0,92 Gew.-Teilen Bis(dimethylaminoethyl)ether,
16,75 Gew.-Teilen Wasser und
4,65 Gew.-Teilen eines Silikonstabilisators.

B-Komponente: 2,4- und 2,6-Toluylen-diisocyanat-Isomerengemisch im Gewichtsverhältnis 80:20

493,4 Gew.-Teile der A-Komponente und 206,6 Gew.-Teile des Toluylendiisocyanat -Isomerengemisches wurden bei Raumtemperatur intensiv gemischt und analog den Angaben in Beispiel 1 verschäumt.

Man erhielt einen Schaumstoff, an dem folgende mechanische Eigenschaften gemessen wurden:
Dichte nach DIN 53 420 [g/l]: 39
Reißdehnung nach DIN 53 571 [%]: 141
Zugfestigkeit nach DIN 53 571 [kPa]: 120.

Das Vergleichsbeispiel zeigt, daß bei Verwendung von Toluylen-diisocyanat anstelle des Isocyanat-Prepolymeren ein Schaumstoff mit schlechterer Dehnung und Zugfestigkeit erhalten wird.

Beispiel 2

A-Komponente: Mischung aus
76,2 Gew.-Teilen eines Glycerin gestarteten Polyoxypropylen -polyoxyethylen-triols mit der Hydroxylzahl 56 analog Beispiel 1,
3,0 Gew.-Teilen Diethanolamin,
2,0 Gew.-Teilen Triethanolamin,
1,0 Gew.-Teilen Triethylendiamin (33 gewichtsprozentig in Dipropylenglykol),
1,0 Gew.-Teilen Bis(dimethylaminoethyl)-ether,

13,3 Gew.-Teilen Wasser und
3,5 Gew.-Teilen Silikonstabilisator.

B-Komponente: Isocyanat-Prepolymer A

100 Gew.-Teile der A-Komponente und 385 Gew.-Teile des Isocyanat-Prepolymer A wurden bei Raumtemperatur intensiv gemischt. 568 g dieser schaumfähigen Reaktionsmischung wurden analog den Angaben von Beispiel 1 in dem dort beschriebenen Formwerkzeug aufschäumen gelassen.

Man erhielt einen Schaumstoff, an dem die folgenden mechanischen Eigenschaften gemessen wurden:
Dichte nach DIN 53 420 [g/l]: 33
Reißdehnung nach DIN 53 571 [%]: 189
Zugfestigkeit nach DIN 53 571 [kPa]: 110.

Vergleichsbeispiel II

A-Komponente: analog Beispiel 2

B-Komponente: Isocyanat-Prepolymer C

100 Gew.-Teile der A-Komponente und 380 Gew.-Teile Isocyanat-Prepolymer C wurden bei Raumtemperatur intensiv gemischt und die schaumfähige Reaktionsmischung in das in Beispiel 1 beschriebene Formwerkzeug eingebracht. Der entstehende Schaumstoff sackte nach dem Aufsteigen in sich zusammen.

Beispiel 3

A-Komponente: analog Beispiel 1

B-Komponente: Isocyanat-Prepolymer B

100 Gew.-Teile der A-Komponente und 395 Gew.-Teile der B-Komponente wurden bei Raumtemperatur intensiv gemischt. 627 g dieser schaumfähigen Reaktionsmischung wurden in ein auf 45°C temperiertes Formwerkzeug mit den Innenabmessungen 40×40×10 cm eingebracht und in dem geschlossenen Formwerkzeug aufschäumen gelassen.

Man erhielt einen Schaumstoff, an dem folgende mechanische Eigenschaften gemessen wurden:
Dichte nach DIN 53 420 [g/l]: 36
Reißdehnung nach DIN 53 571 [%]: 186
Zugfestigkeit nach DIN 53 571 [kPa]: 140.

**Patentansprüche**

1. Verfahren zur Herstellung von elastischen Polyurethan-Weichschaumstoffen durch Umsetzung von

A) organischen Isocyanat-Prepolymeren aus Polyether-Polyolen mit mindestens 50% primären Hydroxylgruppen mit
B) Verbindungen mit reaktiven Wasserstoffatomen in Gegenwart von
C) Treibmitteln,
D) Katalysatoren und gegebenenfalls
E) Hilfsmitteln und/oder Zusatzstoffen

dadurch gekennzeichnet, daß man als Verbindungen mit reaktiven Wasserstoffatomen (B) eine Mischung verwendet aus

a) mindestens einem di- bis tetrafunktionellen Polyether-polyol mit weniger als 10 Gew.% endständigen Ethylenoxidgruppen und einer Hydroxylzahl von 20 bis 80,

b) mindestens einem Alkanolamin und

c) 10 bis 25 Gew.% Wasser, bezogen auf das Gesamtgewicht der Komponenten (B, a) bis (B, c).

2. Verfahren zur Herstellung von elastischen Polyurethan-Weichschaumstoffen nach Anspruch 1, dadurch gekennzeichnet, daß als Verbindungen mit reaktiven Wasserstoffatomen eine Mischung verwendet wird, die besteht aus

a) 55 bis 89,5 Gew.-Teilen mindestens eines di- bis tetrafunktionellen Polyether-polyols mit weniger als 10 Gew.% endständigen Ethylenoxidgruppen und einer Hydroxylzahl von 20 bis 80,

b) 0,5 bis 20 Gew.-Teilen mindestens eines Alkanolamins und

c) 10 bis 25 Gew.-Teilen Wasser, und der Isocyanatindex 70 bis 120 beträgt.

3. Verfahren zur Herstellung von elastischen Polyurethan-Weichschaumstoffen nach Anspruch 1, dadurch gekennzeichnet, daß das organische Isocyanat-Prepolymere (A) einen NCO-Gehalt von 6 bis 20 Gew.% besitzt und hergestellt wird durch Umsetzung von Toluylen-diisocyanaten und/oder Diphenylmethan-diisocyanaten mit mindestens einem di- bis tetrafunktionellen Polyether-polyol mit einer Hydroxylzahl von 20 bis 50 und einem Gehalt an endständigen Ethylenoxidgruppen von 10 bis 30 Gew.%.

4. Verfahren zur Herstellung von elastischen Polyurethan-Weichschaumstoffen nach Anspruch 1, dadurch gekennzeichnet, daß als Alkanolamine (B, b) Di- und/oder Trialkanolamine mit 2 bis 3 C-Atomen im Alkylenrest verwendet werden.

5. Verfahren zur Herstellung von elastischen Polyurethan-Weichschaumstoffen nach Anspruch 1, dadurch gekennzeichnet, daß der Isocyanatindex 70 bis 120 beträgt.

6. Verfahren zur Herstellung von elastischen Polyurethan-Weichschaumstoffen nach Anspruch 1, dadurch gekennzeichnet, daß die Reaktion in Abwesenheit von Halogenkohlenwasserstoffen als Treibmittel durchgeführt wird.

7. Verfahren zur Herstellung von elastischen Polyurethan-Weichschaumstoffen nach Anspruch 1, dadurch gekennzeichnet, daß die Reaktion in einem geschlossenen Formwerkzeug mit einer Formwerkzeugtemperatur von 25 bis 80°C durchgeführt wird.

8. Verfahren nach Anspruch 1, dadurch gekennzeichnet, daß die elastischen Polyurethan-Weichschaumstoffe Dichten von 25 bis 60 kg/m³ besitzen.

9. Elastische Polyurethan-Weichschaumstoffe mit Dichten von 25 bis 60 kg/m³, erhältlich nach den Verfahren gemäß den Ansprüchen 1 bis 6.

10. Elastische Formkörper aus Polyurethan-Weichschaumstoffen mit Dichten von 25 bis 60 kg/m³, erhältlich in geschlossenen Formwerkzeugen nach den Verfahren gemäß den Ansprüchen 1 bis 7.

**Claims**

1. A process for the production of a flexible polyurethane foam by reacting

A) organic isocyanate prepolymers of polyetherpolyols containing at least 50% of primary hydroxyl groups with

B) compounds having reactive hydrogen atoms in the presence of

C) blowing agents,

D) catalyts and, if required,

E) assistants and/or additives wherein a mixture of

a) at least one di- to tetrafunctional polyetherpolyol having less than 10% by weight of terminal ethylene oxide groups and a hydroxyl number of 20 to 80,

b) at least one alkanolamine and

c) from 10 to 25% by weight, based on the total weight of components (B, a) to (B, c), of water is used as compounds having reactive hydrogen atoms (B).

2. A process for the production of a flexible polyurethane foam as claimed in claim 1, wherein a mixture which consists of

a) from 55 to 89.5 parts by weight of at least one di- to tetrafunctional polyetherpolyol having less than 10% by weight of terminal ethylene oxide groups and a hydroxyl number of from 20 to 80,

b) from 0.5 to 20 parts by weight of at least one alkanolamine and

c) from 10 to 25 parts by weight of water is used as compounds having reactive hydrogen atoms, and the isocyanate index is from 70 to 120.

3. A process for the production of a flexible polyurethane foam as claimed in claim 1, wherein the organic isocyanate prepolymer (A) has an NCO content of from 6 to 20% by weight and is prepared by reacting toluylene diisocyanates and/or diphenylmethane diisocyanates with at least one di- to tetrafunctional polyetherpolyol having a hydroxyl number of from 20 to 50 and a content of terminal ethylene oxide groups of from 10 to 30% by weight.

4. A process for the production of a flexible polyurethane foam as claimed in claim 1, wherein di- and/or trialkanolamines where the alkylene radical is of 2 or 3 carbon atoms are used as the alkanolamines (B, b).

5. A process for the production of a flexible polyurethane foam as claimed in claim 1, wherein the isocyanate index is from 70 to 120.

6. A process for the production of a flexible polyurethane foam as claimed in claim 1, wherein the reaction is carried out in the absence of halohydrocarbons as blowing agents.

7. A process for the production of a flexible polyurethane foam as claimed in claim 1, wherein the reaction is carried out in a closed mold at a mold temperature of from 25 to 80°C.

8. A process as claimed in claim 1, wherein the flexible polyurethane foam has a density of from 25 to 60 kg/m³.

9. A flexible polyurethane foam having a density of from 25 to 60 kg/m³, obtainable by a process as claimed in any of claims 1 to 6.

10. A flexible molded part from a flexible polyurethane foam having a density of from 25 to 60 kg/m³, obtainable in a closed mold by a process as claimed in any of claims 1 to 7.

## Revendications

1. Procédé de préparation de mousses souples et élastiques de polyuréthane par réaction de

A) prépolymères d'isocyanate organiques composés de polyéthers-polyols contenant au moins 50% de groupements hydroxy primaires avec

B) des composés contenant des atomes d'hydrogène réactifs en présence

C) d'agents moussants,

D) de catalyseurs et éventuellement

E) d'adjuvants et/ou d'additifs, caractérisé en ce qu'on utilise, comme composés contenant des atomes d'hydrogène réactifs (B), un mélange de

a) au moins un polyéther-polyol bi- à tétrafonctionnel contenant moins de 10% en poids de groupements oxyde d'éthylène terminaux et ayant un indice d'hydroxyle de 20 à 80,

b) au moins une alcanolamine et

c) 10 à 25% en poids d'eau, par rapport au poids total des composants (B, a) à (B, c).

2. Procédé de préparation de mousses souples et élastiques de polyuréthane selon la revendication 1, caractérisé en ce qu'on utilise, comme composés contenant des atomes d'hydrogène réactifs, un mélange qui se compose de

a) 55 à 89,5 parties en poids d'au moins un polyétherpolyol bi- à tétrafonctionnel contenant moins de 10% en poids de groupements oxyde d'éthylène terminaux et ayant un indice d'hydroxyle de 20 à 80,

b) 0,5 à 20 parties en poids d'au moins une alcanolamine et

c) 10 à 25 parties en poids d'eau et en ce que l'indice d'isocyanate est compris entre 70 et 120.

3. Procédé de préparation de mousses souples et élastiques de polyuréthane selon la revendication 1, caractérisé en ce que le prépolymère d'isocyanate organique (A) a une teneur en NCO de 6 à 20% en poids et est préparé par réaction de diisocyantes de toluylène et/ou de diisocyanates de diphénylméthane avec au moins un polyéther-polyol bi- à tétrafonctionnel ayant un indice d'hydroxyle de 20 à 50 et une teneur en groupements oxyde d'éthylène terminaux de 10 à 30% en poids.

4. Procédé de préparation de mousses souples et élastiques de polyuréthane selon la revendication 1, caractérisé en ce qu'on utilise, comme alcanolamines (B, b) des di- et/ou trialcanolamines contenant 2 à 3 atomes de carbone dans le reste alkylène.

5. Procédé de préparation de mousses souples et élastiques de polyuréthane selon la revendication 1, caractérisé en ce que l'indice d'isocyanate est compris entre 70 et 120.

6. Procédé de préparation de mousses souples et élastiques de polyuréthane selon la revendication 1, caractérisé en ce que la réaction est conduite en l'absence d'hydrocarbures halogénés comme agents moussants.

7. Procédé de préparation de mousses souples et élastiques de polyuréthane selon la revendication 1, caractérisé en ce que la réaction est conduite dans un outil de moulage fermé, à une température de l'outil de moulage de 25 à 80°C.

8. Procédé selon la revendication 1, caractérisé en ce que les mousses souples et élastiques de polyuréthane ont des masses volumiques de 25 à 60 kg/m³.

9. Mousses souples et élastiques de polyuréthane ayant des masses volumiques de 25 à 60 kg/m³, obtenues par le procédé selon l'une quelconque des revendications 1 à 6.

10. Pièces moulées élastiques en mousses souples de polyuréthane ayant des masses volumiques de 25 à 60 kg/m³, obtenues dans des outils de moulage fermés par le procédé selon l'une quelconque des revendications 1 à 7.